(19) Europäisches Patentamt

European Patent Office

Office européen des brevets

(11) **EP 0 890 834 A2**

(12) **EUROPÄISCHE PATENTANMELDUNG**

(43) Veröffentlichungstag:
**13.01.1999 Patentblatt 1999/02**

(51) Int. Cl.$^6$: **G01N 27/60**, G01N 15/06

(21) Anmeldenummer: 98112433.2

(22) Anmeldetag: **04.07.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **08.07.1997 DE 19729144**

(71) Anmelder:
**Dr. Födisch Umweltmesstechnik GmbH
04420 Kulkwitz (DE)**

(72) Erfinder: **Födisch, Holger Dr,
04347 Leipzig (DE)**

(74) Vertreter: **Voigt, Wolf-Rüdiger
Patentanwalt,
Alter Markt 1-2
06108 Halle (DE)**

(54) **Verfahren und Gerätesystem zur kontinuierlichen Ermittlung der Staubkonzentration in strömenden Gasen**

(57) Die Erfindung betrifft ein Verfahren und ein Gerätesystem zur kontinuierlichen Ermittlung der Staubkonzentration in strömenden Gasen sowie der gleichzeitigen Messung der Gasgeschwindigkeit und der Gastemperatur.

Ziel der Erfindung ist ein neuartiges Verfahren und kompaktes Gerätesystem auf der Basis des triboelektrischen Effektes, welches mit einer hohen Genauigkeit und Verfügbarkeit arbeitet, sowie einen geringen Wartungsbedarf hat. Die Staubmessung erfolgt mittels des triboelektrischen Effektes, wobei durch eine Kompensation des Einflusses der Geschwindigkeit die geforderte Genauigkeit erreicht wird. Eine redundante Meßanordnung, eine besondere Sondenform sowie ein spezieller Auswertmechanismus sorgen für eine bisher mit konventionellen Meßverfahren nicht erreichte hohe Verfügbarkeit der Meßsignale. Durch den kompakten Aufbau und eine spezielle Sondenanordnung und -form wird der Aufwand für Herstellung, Montage und insbesondere Wartung minimiert.

Figur 2

EP 0 890 834 A2

**Beschreibung**

Die Erfindung betrifft ein Verfahren zur kontinuierlichen Ermittlung der Staubkonzentration auf der Grundlage des triboelektrischen Effektes. Die Erfindung betrifft weiterhin ein entsprechendes Gerätesystem unter Verwendung von triboelektrischen Sensoren und einer Auswerteinheit für die Signale. Die kontinuierliche Ermittlung der Staubkonzentration in strömenden Gasen erfolgt insbesondere zur Reingasüberwachung von Schlauchfiltern und anderen Staubabscheidern. Das Verfahren und das entsprechende Gerätesystem ist in nahezu allen Zweigen von Industrie und Technik anwendbar, in denen staubbeladene Gase auftreten.

Zur kontinuierlichen Ermittlung der Staubkonzentration in strömenden Gasen ist eine große Anzahl von Gerätekonfigurationen bekannt, denen unterschiedliche Meßprinzipien zu Grunde liegen. In der Praxis haben sich vor allem optische Meßverfahren, die auf der Basis der Transmission oder der Streuung des Lichtes beruhen, durchgesetzt. Weiterhin sind Verfahren bekannt, die die Absorption ausgesandter $\beta$-Strahlen als Maß für den Staubmassenstrom bestimmen. Die Messung des Staubgehaltes erfolgt dabei direkt im staubbeladenen Strom (in-situ), oder es wird ein Teilstrom abgezogen und danach vermessen (extraktiv).

Die optischen Meßverfahren sind konstruktiv äußerst aufwendig, und verursachen damit in Herstellung. Betrieb und Wartung hohe Kosten. Der Abgleich des Null- und Referenzpunktes erfolgt durch mechanisch eingeschwenkte Referenzmaterialien, damit erhöht sich die Ausfallwahrscheinlichkeit bzw. der konstruktive Aufwand. Die Reinigung der mit dem Staub in Berührung kommenden Teile erfolgt mittels einer Hilfsenergie.

Die radiometrischen Verfahren weisen auf Grund der zu verwendenden radioaktiven Isotope, und den damit verbundenen Aufwendungen, neben der aufwendigen Konstruktion und den hohen Betriebskosten einen weiteren Nachteil auf.

Neben den oben angeführten kommerziell genutzten Prinzipien existiert eine Vielzahl weiterer Meßprinzipien, die kaum oder nur in begrenztem Umfang zur kontinuierlichen Messung des Staubgehaltes genutzt werden bzw. bisher nicht genutzt werden konnten.

Ein bisher nur für die qualitative Überwachung des Staubgehaltes genutztes Verfahren ist das kontakt- bzw. reibungselektrische oder triboelektrische Meßverfahren. Mit diesem Verfahren wird das Auftreten von Teilchen in einer Strömung gemessen. Eine relative Zuordnung der Teilchenkonzentration ist realisierbar, jedoch ist eine genaue Zuordnung des Meßsignales zur Staubkonzentration nur in Fällen konstanter Geschwindigkeit möglich.

So beschreiben WO 94/25865, WO 94/23281 und WO 93/22653 Meßgeräte, die die Konzentration bzw. den Massenstrom fester Partikel in Gasen detektieren. Diese Geräte berücksichtigen jedoch nicht den Einfluß der Fluidgeschwindigkeit auf die Höhe des triboelektrischen Meßsignals. In US-4607228 wird der Einfluß der Geschwindigkeit durch eine Teilgasentnahme mit konstanter Geschwindigkeit gelöst.

Die Nutzung der Triboelektrizität zur Staubkonzentrationsmessung ist ohne Korrektur des Geschwindigkeitseinflusses nicht möglich.

Ein weiterer Nachteil bisheriger triboelektrischer Meßverfahren ist die rasche Verschmutzung der Sonden. Diese müssen entweder gespült oder anderweitig regelmäßig gereinigt werden.

Unter Beachtung der bisherigen Ausführungen ist es daher die Aufgabe der Erfindung, ausgehend vom triboelektrischen Meßprinzip ein Verfahren und ein Gerätesystem vorzuschlagen, welches mit hoher Genauigkeit und Verfügbarkeit arbeitet. Durch eine einfache kompakte Konstruktion soll der Aufwand für Herstellung, Montage, Betrieb, Wartung und Platzbedarf erheblich unter denen herkömmlicher Staubmeßgeräte liegen.

Erfindungsgemäß wird die Aufgabe wie folgt gelöst, wobei hinsichtlich der grundlegenden Gedanken die das neue Verfahren zur kontinuierlichen Ermittlung der Staubkonzentration in strömenden Gasen betreffen, auf den Patentanspruch 1 und bei der weiteren Ausgestaltung des Verfahrens auf die Patentansprüche 2 bis 4 verwiesen wird. Die grundlegend neuen Gedanken, die das Gerätesystem betreffen, ergeben sich aus dem Patentanspruch 5, und eine weitere Ergänzung zum Gerätesystem ergibt sich aus den Patentansprüchen 5 bis 8. Wie aus dem 1. Patentanspruch ersichtlich ist, erfolgt eine Kopplung von triboelektrischem Meßprinzip und Geschwindigkeitsmessung. Durch redundante Anordnung der triboelektrischen Meßsonden wird die Verfügbarkeit des Gerätesystems erhöht und eine wirksame Fehlerüberwachung geschaffen. Das Gerät besteht im wesentlichen aus einer Sonde und einer Auswerteinheit. Die komplette Bauweise und konstruktive Gestaltung ermöglicht den Einbau der Sonde in einen Flansch NW 80.

Die Sonde bestellt aus zwei Sensoren zur Aufnahme des Staubsignals, einem Sensor zum Nullpunktabgleich und einer Staudrucksonde mit integriertem Temperaturaufnehmer zur Ermittlung der Geschwindigkeit und der Temperatur. Im Sondenkopf sind Vorverstärker für die Aufnahme des Staubsignals, ein Drucktransmitter und die Temperaturauswertung integriert.

Die Aufnahme des Staubsignals erfolgt mittels des triboelektrischen Effektes. Zwei elektrisch isoliert angeordnete Metallstäbe werden in den staubbeladenen Gasstrom eingeführt. Mit diesen Stäben kollidierende und an den Stäben reibende Partikel erzeugen eine Aufladung der Metallstäbe.

Die Staubsensoren können mit unterschiedlichen Längen ausgeführt werden. Dadurch ergibt sich neben dem Umschalten verschiedener Meßbereiche durch verschiedene elektronische Verstärkungsstufen die Möglichkeit der Meßbereichsumschaltung durch verschieden große Sensoroberflächen.

Die Drift der elektronischen Schaltung durch verschiedene Umgebungstemperaturen wird durch eine integrierte Temperaturkompensation unterdrückt. Die Drift der elektronischen Schaltung durch andere Einflüsse, wie Alterung der Bauteile usw. wird jedoch damit nicht unterbunden. Dieses erfolgt mittels automatischem Abgleich des Null- und Referenzpunktes im Vorverstärker. Für den Nullpunktabgleich wird der Staubsensor periodisch elektronisch vom Vorverstärker getrennt und auf den Nullpunktsensor geschaltet. Der Nullpunktabgleich kann ebenfalls nur durch elektronisches Trennen des Staubsensors vom Vorverstärker erfolgen. Fur den Referenzpunktabgleich wird die elektronische Schaltung mit einem definierten Signal beaufschlagt. Damit wird erreicht, daß eine eventuell auftretende Drift der elektronischen Schaltung vollständig kompensiert wird.

Die Erfindung soll nunmehr anhand eines Ausführungsbeispiels erläutert werden.
Die Figuren zeigen:

Figur 1    Prinzipschaltbild des triboelektrischen Gerätesystems
Figur 2    Sonde, teilweise Schnittdarstellung
Figur 3    Anordnung der Sensoren
Figur 4    Darstellung eines triboelektrischen Trapezsensors
Figur 5    Umströmung der Sensoren
Figur 6    Blockschaltbild der elektronischen Schaltung
Figur 7    Ablaufplan für die Signalauswertung
Figur 8    Ablaufplan für die Fehlerauswertung der Sensorsignale "Staub"

Hinsichtlich der verwendeten Bezugszeichen wird auf das beigefügte Blatt mit der Bezugszeichenaufstellung verwiesen.

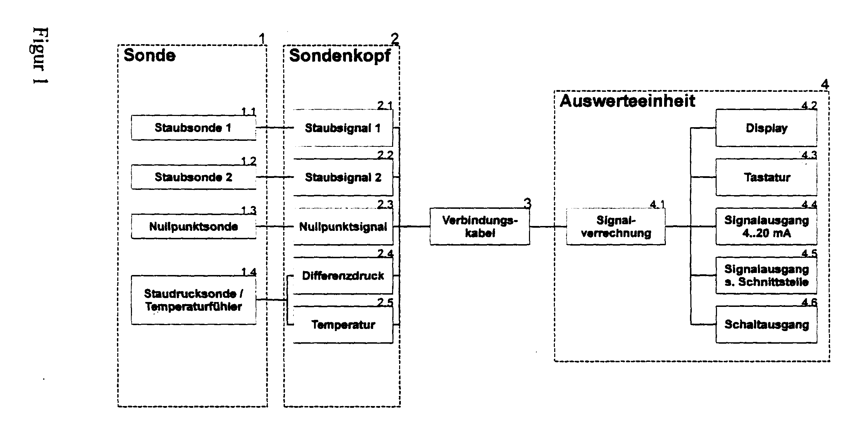

In Figur 1 ist das Prirzipschaltbild des Gerätesystems abgebildet.

Das Gerätesystem besteht aus der eigentlichen Sonde 1 mit dem Sondenkopf 2 und der Auswerteinheit 4. Die Sonde 1 besteht aus vier Sensoren, zwei Staubsensoren 1.1, 1.2, dem Nullpunktsensor 1.3 für das Staubsignal und der Staudrucksonde 1.4 mit integriertem Temperatursensor. Die Signale der Staubsensoren 1.1, 1.2 und des Nullpunktsensors 1.3 werden im Sondenkopf 2 durch Verstärker 2.1, 2.2, 2.3 weiterverarbeitet. Der Differenzdruck wird durch einen Drucktransmitter 2.4 aufgenommen. Das Signal des Temperatursensors wird im Umformer 2.5 umgewandelt.

Die Signale werden zu einer Auswerteinheit 4 weitergeleitet. In der Auswerteinheit 4 befindet sich der Mikro-Controller 4.1 zur Abarbeitung des Algorithmus für die Bestimmung des Staubgehaltes. Die Ausgabe erfolgt über ein Display 4.2, Signalausgänge 4...20 mA - Positionszeichen 4.4 - und über eine serielle Schnittstelle 4.5. Diskrete Vorgänge (Grenzwertüberschreitung, Wartungsbedarf) können über Schaltausgänge 4.6 ausgegeben werden. Zur Berechnung nötige Größen, Wartungsbestätigungen und Abgleichaufforderungen, können sowohl über Tastatur 4.3 als auch über die serielle Schnittstelle 4.5 eingegeben werden.

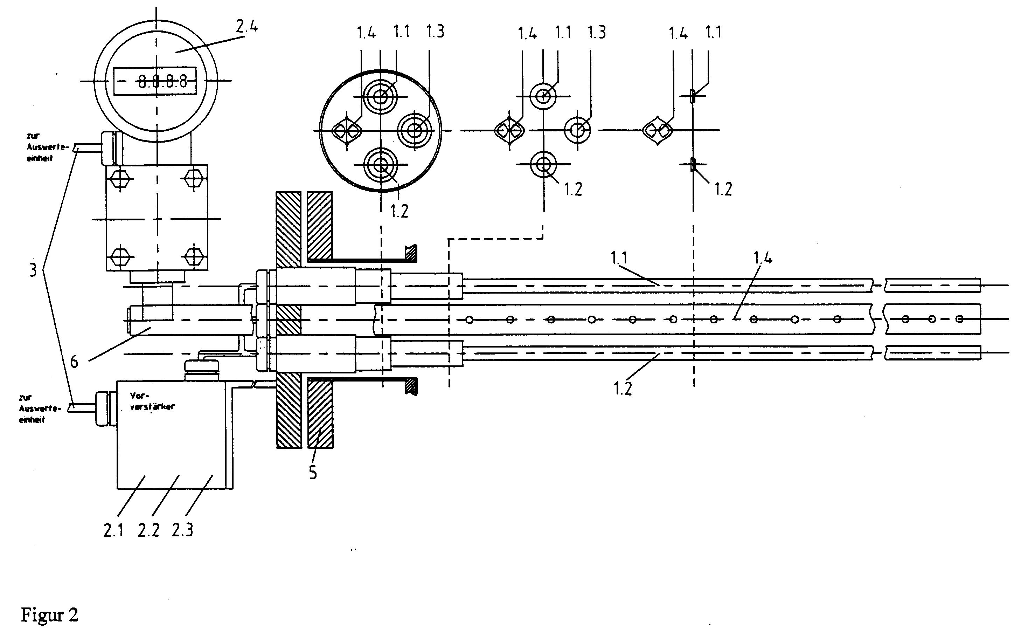

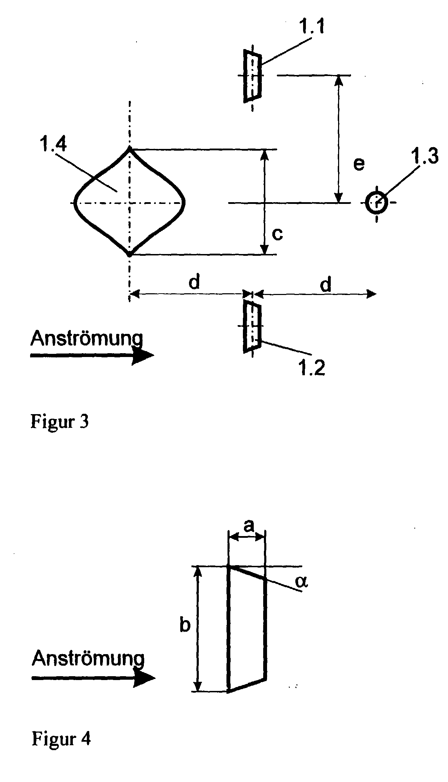

Die Figur 2 zeigt im wesentlichen den konstruktiven Aufbau der Sonde 1. Die Sensoren (1.1 bis 1.4) sind alle auf einem Flansch 5 montiert. Die Nennweite des Flansches kann beispielsweise 80 mm betragen. Die Staubsensoren 1.1, 1.2 und der Nullpunktsensor 1.3 sind mit geschirmten Kabeln mit dem Vorverstärker (2.1, 2.2, 2.3) für die jeweiligen Signale verbunden. Zur optimalen Platzausnutzung werden die einzelnen Sensoren (1.1 bis 1.4) in etwa auf einem Kreis angeordnet (siehe angedeutete Schnitte über der Sonde in Prinzipdarstellung bzw. Figur 3). Der Drucktransmitter 2.4 ist direkt an der Geschwindigkeitsmeßeinrichtung 6 angeflanscht.Die Sonde 1 kann über einen Anschweißflansch 5 direkt an der Rohrleitung bzw. am Kanal montiert werden.

Die Staubsensoren sind in Strömungsrichtung nach der Staudrucksonde 1.4, die Bestandteil der Geschwindigkeitsmeßrichtung 6 ist, angeordnet. Das hat den Vorteil, daß die Volumenströmmessung nicht durch andere Bauteile beeinflußt wird. Diese Anordnung wurde aufgrund der nötigen Vergleichbarkeit der Signale gewählt.

Die Sensoren 1.1, 1.2 liegen in der gleichen Strömungsebene, beeinflussen sich also nicht gegeneinander und haben bei gleicher Umströmung und gleicher Sondenlänge die gleichen Signale.

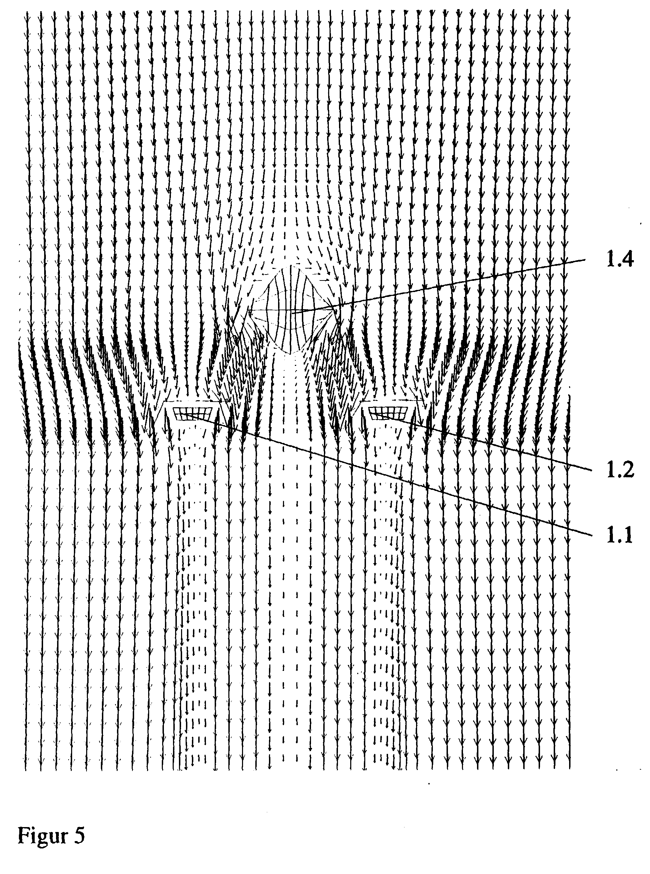

Auch eine Beeinflussung durch die Geschwindigkeitsmeßeinrichtung 6 ist ausgeschlossen, da sichergestellt wurde, daß die Staubsensoren 1.1, 1.2 links und rechts des jeweiligen Nachlaufgebietes liegen. In diesem Zusammenhang wird auf die Figur 5 verwiesen.

Der Nullpunktsensor 1.3 liegt hinter der Gescllwindigkeitsmeßeinrichtung. Da er keine der Strömung entgegenwirkende Fläche hat, beeinflußt die Nachlaufströmung der Geschwindigkeitsmeßeinrichtung 6 das Nullpunktsignal nicht. Es besteht also nur elektrischer Kontakt zum Gasstrom, ein triboelektrisches Signal, verursacht durch aufprallende Partikel, ist ausgeschlossen.

Der Nullpunktsensor 1.3 ist in Anschluß und Montage identisch mit den Staubsensoren.

Die Länge der Staubsensoren 1.1, 1.2 kann dem jeweiligen Einsatzort angepaßt werden. Über die Länge der Sensoren kann man die jeweilige, für die Meßaufgabe optimale, Oberfläche anpassen. Im allgemeinen werden die Sensoren 1.1, 1.2 mit gleicher Länge in etwa im Durchmesser des Rohres gefertigt.

Das Profil eines Staubsensors 1.1 oder 1.2 ist in Figur 4 dargestellt. Der Winkel $\alpha$ beträgt 15 bis 45° und das Verhältnis a:b = 0,1 bis 0,5. Bei dem Trapezprofil ist zu beachten, daß sich durch den konstruktiven Aufbau bedingt, der Sensor selber reinigt. Dieser Reinigungseffekt läßt sich durch die an den Kanten auftretenden Wirbel zurückführen, die die Staubpartikel mitreißen und somit einen Schmutzbelag an der Sondenoberfläche verhindern. Im Gegensatz zu Rundstäben, wo die Wirbel in einer etwa durchmessergleichen „forming zone" gebildet werden, sind die Wirbel des Trapezsensors sofort hinter dem Profil ausgebildet. Sie besitzen damit eine höhere Energie in Sensornähe und verhindern so die Verschmutzung der Oberfläche.

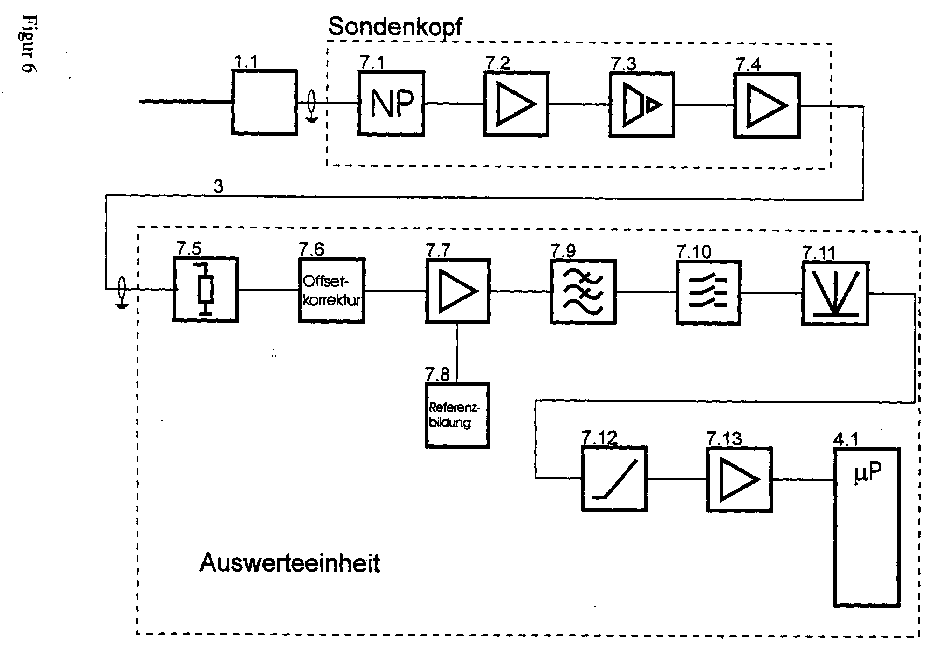

Figur 6 zeigt das Blockschaltbild der elektronischen Schaltung für einen triboelektrischen Sensor 1.1 oder 1.2 bzw. den Nullpunktsensor 1.3. Über ein geschirmtes Kabel 3 wird das triboelektrische Sensorsignal in den Sondenkopf zu einer vom Mikro-Controller 4.1 gesteuerten Aufschaltung des Nullpunktes 7.1 geleitet. Hier wird das Sensorsignal zum Nullpunktabgleich elektronisch von der Schaltung getrennt und ein Nullpunktsignal aufgeschaltet. Danach erfolgt eine wesentliche Anhebung des Signalpegels durch einen Strom - Spannungs - Wandler mit T - Rückkopplungsnetzwerk 7.2. In einem Trennverstärker 7.3 wird das Signal galvanisch von der nachfolgenden Verarbeitung getrennt. Ein weiterer Verstärker 7.4 fungiert als Leitungstreiber, dabei erfolgt eine zusätzliche Signalerhöhung um Übertragungsfehler physikalischer Art im Verbindungskabel zur Auswerteeinheit auszuschließen.

In der Auswerteeinheit erfolgt zunächst eine Leitungsanpassung und erste Störsignalunterdrückung 7.5. Danach wird das Signal durch einen beim Abgleich des Nullpunktes ermittelten Offset korrigiert 7.6. Im Verstärker 7.7 erfolgt eine weitere Erhöhung des Signals. Durch periodisches Aufschalten des in 7.8 generierten Referenzsignals wird ein Referenzabgleich durchgeführt. Danach wird der Rauschanteil des Staubsignals durch einen Tiefpaßfilter 7.9 unterdrückt. In einem durch den Mikro-Controller 4.1 gesteuerten Umschalter 7.10 kann zwischen vier Meßbereichen gewählt werden. Da am Sensor durch die Staubteilchen hervorgerufene negative bzw. positive Ströme auftreten, wird das Signal in einem Präzisionsgleichrichter 7.11 gleichgerichtet. In einer Integrationsstufe 7.12 wird das Signal geglättet und für die Verarbeitung im Controller 4.1 durch einen weiteren Verstärker 7.13 angepaßt.

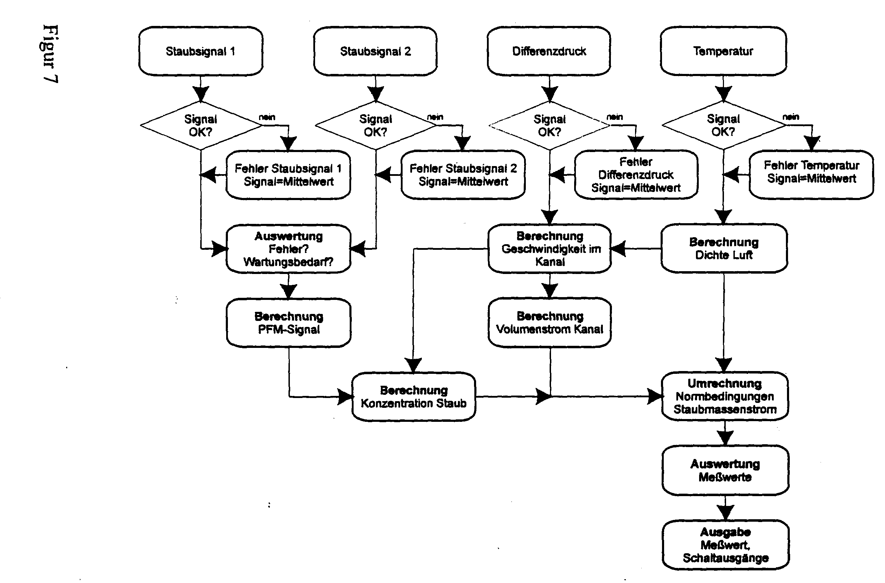

Die Berechnung des Staubgehaltes erfolgt nach Figur 7. Die Signale des Staubgehaltes, Differenzdruck und Temperatur werden zuerst auf ihre Korrektheit geprüft. Das bedeutet, daß geprüft wird: Liegt das Signal innerhalb des Meßbereiches? Hat das Signal, im Gegensatz zu den anderen Signalen eine sprunghafte Änderung erfahren? usw. In regelmäßigen Abständen erfolgt ein Null- und Referenzpunktabgleich. Für diese Zeit wird die Auswertung des Fehler- und Wartungszustands ausgesetzt.

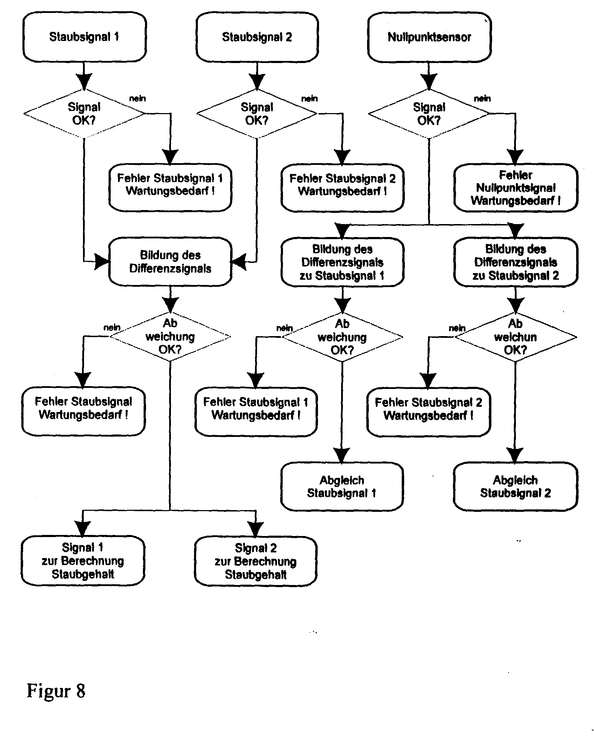

Die Auswertung des Wartungs- und Fehlerzustandes der Staubsignale erfolgt nach Figur 8. In einer ersten Stufe wird die physikalische Korrektheit des Signals untersucht. Das bedeutet:

- Signal vorhanden?
- Signal im Meßbereich?
- Signalanstieg im erlaubten Bereich?

In einer zweiten Stufe wird die Plausibilität des Signals geprüft:

- Wie entwickelt sich die Differenz der beiden Sensorsignale?
- Übersteigt die Differenz der beiden Sensorsignale einen bestimmten Wert?
- Übersteigt der Anstieg der Differenz der beiden Sensorsignale einen bestimmten Wert?

In einer dritten Stufe werden die Offsets des Null- und Referenzpunktabgleichs, also die Drift der elektronischen Schaltung und der Meßwertaufnehmer untersucht:

- Übersteigt der Offset einen bestimmten Wert?
- Übersteigt der Anstieg des Offsets einen bestimmten Wert?

Ist das Signal in Ordnung, wird es zur Verrechnung freigegeben. Ist ein Fehler aufgetreten, wird das Signal durch einen Mittelwert ersetzt, bis der Fehler behoben ist, oder nicht mehr auftritt, hierbei bleibt die Fehlermeldung erhalten.

Nach der Fehlerauswertung wird der Staubgehalt aus den vier Sensorsignalen gebildet. Zuerst wird aus den beiden Staubsignalen ein gewichteter Mittelwert nach Gleichung 1 gebildet, die Konstanten a und b werden in Abhängigkeit z.B. von der Sondenlänge und dem im Kanal herrschenden Strömungsregime gebildet. Die Geschwindigkeit wird mit Hilfe des Differenzdrucks nach Gleichung 3 berechnet.

Aus der berechneten Geschwindigkeit und dem verrechneten triboelektrischen Signal läßt sich nun der Staubgehalt bestimmen. Theoretisch ist das tiboelektrische Signal von einer Vielzahl von Faktoren abhängig. So spielten die Art des Staubes (Korngröße, Kornform und elektrische Eigenschaften) und die verfahrenstechnischen Randbedingungen (Geschwindigkeit, Temperatur und Gaszusammensetzung) eine große Rolle.

Experimentelle Untersuchungen haben ergeben, daß das triboelektrische Signal einer Staubart im wesentlichen von der Staubkonzentration und der Geschwindigkeit abhängt. Andere Faktoren sind entweder nicht relevant (Temperatur, Gaszusammensetzung) oder variieren für die jeweilige Meßaufgabe in nicht beeinflussenden Bereichen (Korngröße, Kornform und elektrische Eigenschaften). Experimentelle Untersuchungen haben ein Verhalten des triboelektrischen Signals linear vom Staubgehalt und potentiell von der Geschwindigkeit ergeben.

Damit kann der Staubgehalt im Betriebszustand nach Gleichung 4 berechnet werden. Die Konstanten a, b und c dieser Gleichung müssen durch eine Kalibrierung des Meßgerätes gefunden werden. Für die Ausgabe an ein Meßwerterfassungssystem wird die Staubkonzentration im allgemeinen im Normzustand angegeben. Die Umrechnung erfolgt mit der Gastemperatur, dem Druck im Kanal und der Gasfeuchte nach der Berechnungsvorschrift in der VDI / VDE 2040.

**Gleichungen:**

$$I_{Staub} = a \cdot I_{Staub\_1} + b \cdot I_{Staub\_2} \qquad (1)$$

$$\rho = \rho_0 \frac{T_0}{T} \frac{p}{p_0} \qquad (2)$$

$$v = \sqrt{\frac{2 \cdot \Delta p}{\xi \cdot \rho}} \qquad (3)$$

$$C_{Staub} = a \cdot I_{Staub} \cdot v^b + c \qquad (4)$$

| a,b,c | - | allgemeine Konstanten |
|---|---|---|
| I | mA | allgemeines Signal |
| $\rho$ | kg/m$^3$ | Dichte |
| $\xi$ | - | Widerstandsbeiwert |
| $\Delta p$ | Pa | Differenzdruck Sonde |
| T | K | Temperatur |
| p | Pa | Druck |
| $C_{staub}$ | g/m$^3$ | Staubkonzentration i.B. |

EP 0 890 834 A2

**Bezugszeichen**

1        – Sonde
1.1      – Staubsensor
1.2      – Staubsensor
1.3      – Nullpunktsensor
1.4      – Staudrucksonde mit integriertem Temperatursensor, angeordnet in einem Staurohr
2.       – Sondenkopf
2.1      – Vorverstärker für Staubsignal
2.2      – Vorverstärker für Staubsignal
2.3      – Vorverstärker für Nullpunktsignal
2.4      – Drucktransmitter für Differenzdruck
2.5      – Umformer für Signal des Temperatursensors
3.       – Verbindungskabel zum Mikro-Controller
4.       – Auswerteinheit
4.1      – Mikro-Controller
4.2      – Display
4.3      – Tastatur
4.4      – Signalausgänge
4.5      – Serielle Schnittstelle
4.6      – Schaltungsausgang
5.       – Anschweißflansch
6.       – Geschwindigkeitsmeßeinrichtung
7.       – Elektronische Schaltung mit den Baugruppen
7.1      – Aufschaltung des Nullpunktes
7.2      – Rückkopplungsnetzwerk
7.3      – Trennverstärker - Signal wird galvanisch von der nachfol- }Baugruppen im Sondenkopf 2
         genden Verarbeitung getrennt
7.4      – Trennverstärker als Leitungstreiber
7.5      – Störsignalunterdrückung
7.6      – Offsetkorrektur
7.7      – Verstärker für weitere Signalerhöhung          }Baugruppen in der
7.8      – Referenzbildung                                 Auswerteinheit 4
7.9      – Tiefpaßfilter
7.10     – Umschalter
7.11     – Präzisionsgleichrichter
7.12     – Integrationsstufe
7.13     – Signalverstärker für Verarbeitung im Mikro-Controller

6

EP 0 890 834 A2

**Patentansprüche**

1. Verfahren zur kontinuierlichen Ermittlung der Staubkonzentration in strömenden Gasen auf der Grundlage des triboelektrischen Effektes und Messung der Geschwindigkeit, dadurch gekennzeichnet, daß eine Koppelung von triboelektrischem Meßprinzip und Geschwindigkeitsermittlung erfolgt, wobei mit Hilfe des in der Geschwindigkeitsmeßeinrichtung (6) integrierten Temperatursensors die jeweilige Temperatur ermittelt wird, weiterhin der jeweilige Differenzdruck mit Hilfe der Staudrucksonde (1.4) ermittelt wird, weiterhin mit Hilfe der Staubsensoren (1.1, 1.2, 1.3) das jeweilige Staubsignal gemessen und die Funktion des Systems geprüft wird und entsprechend der Temperatur und des Differenzdruckes die jeweilige Geschwindigkeit berechnet und damit aus den Staubsignalen der Staubsensoren (1.1, 1.2,) die jeweilige Staubkonzentration bestimmt wird.

2. Verfahren nach Anspruch 1, dadurch gekennzeichnet, daß zwei Staubsensoren (1.1, 1.2) mit trapezförmigem Querschnitt und einer Anströmfläche rechtwinklig zur Strömung über relativ lange Zeit ein gleichbleibend hohes Meßsignal liefern und damit eine Auswertung des Wartungs- und Fehlerzustandes mit Hilfe eines entsprechenden Algorithmus erfolgt.

3. Verfahren nach Anspruch 1, dadurch gekennzeichnet, daß der Nullpunkt des Gerätesystems elektronisch abgeglichen wird, indem die Staubsensoren (1.1, 1.2) periodisch elektronisch von den Vorverstärkern (2.1, 2.2) getrennt werden und auf den Nullpunktsensor geschaltet werden.

4. Verfahren nach Anspruch 1, dadurch gekennzeichnet, daß der Referenzpunktabgleich des Gerätesystems erfolgt, indem die Staubsensoren (1.1, 1.2) elektronisch von den Verstärkern (2.1, 2.2) getrennt werden und das Aufschalten einer Referenzspannung vorgenommen wird.

5. Gerätesystem zur kontinuierlichen Ermittlung der Staubkonzentration in strömenden Gasen unter Verwendung von tribolektrischen Sensoren und Bauteilen zur Geschwindigkeitsmessung, gekennzeichnet durch die redundante Anordnung von zwei Staubsensoren (1.1, 1.2), einem Nullpunktsensor (1.3) und einer Staudrucksonde (1.4) mit integriertem Temperatursensor, wobei diese Bauteile (1.1. bis 1.4) im Sinne einer Sonde (1), vorzugsweise in einem Flansch (5) plaziert sind, zur Weiterleitung der Signale der Staudrucksonde (1.4) eine mechanische Verbindung zwischen der Geschwindigkeitsmeßeinrichtung (6) und dem Drucktransmitter (2.4) besteht, zur Weiterleitung der Signale der Sensoren (1.1, 1.2, 1.3) eine elektrische Verbindung zu den Vorverstärkern (2.1, 2.2, 2.3) besteht und weiterhin ein wesentlicher Bestandteil des Geräte systems die Auswerteinheit (4) darstellt.

6. Gerätesystem nach Anspruch 5, dadurch gekennzeichnet, daß die Anordnung der Sensoren (1.1, 1.2, 1.3) und der Staudrucksonde (1.4), die sich in einer Geschwindigkeitsmeßeinrichtung (6) befindet, derartig erfolgt, daß die Staubsensoren (1.1, 1.2) auf gleicher Ebene, bezogen auf den Querschnitt des Rohres mit dem strömenden Gas, angeordnet sind, sich die Geschwindigkeitsmeßeinrichtung (6) vor den Staubsensoren (1.1, 1.2) befindet und der Nullpunktsensor (1.3) in Strömungsrichtung hinter der Geschwindigkeitsmeßeinrichtung (6) angeordnet ist, wobei die Bauteile (1.1, 1.2, 1.3, 1.4) gemäß Figur 3 vorzugsweise zueinander im Sinne eines auf die Spitze gestellten Quadrates angeordnet sind.

7. Gerätesystem nach Anspruch 5 und 6, dadurch gekennzeichnet, daß die Staubsensoren (1.1, und 1.2) mit unterschiedlicher Länge ausgeführt sein können.

8. Gerätesystem nach Anspruch 5 und 6, dadurch gekennzeichnet, daß die Staubsensoren (1.1, und 1.2) im Querschnitt ein scharfkantiges trapezförmiges Profil aufweisen und gemäß Figur 4 die Anströmung der Staubsensoren (1.1, 1.2) gegeben ist.

**Auswerteeinheit** 4

4.2 Display
4.3 Tastatur
4.4 Signalausgang 4..20 mA
4.5 Signalausgang s. Schnittstelle
4.6 Schaltausgang
4.1 Signal-verrechnung

3 Verbindungs-kabel

**Sondenkopf** 2

2.1 Staubsignal 1
2.2 Staubsignal 2
2.3 Nullpunktsignal
2.4 Differenzdruck
2.5 Temperatur

**Sonde** 1

1.1 Staubsonde 1
1.2 Staubsonde 2
1.3 Nullpunktsonde
1.4 Staudrucksonde / Temperaturfühler

Figur 1

EP 0 890 834 A2

2.4

1.4  1.1  1.3     1.4  1.1  1.3     1.4  1.1

zur
Auswerteeinheit

1.2

1.2

1.2

3

1.1

1.4

6

1.2

zur
Auswerteeinheit

Vorverstärker

5

2.1  2.2  2.3

Figur 2

1.1

1.4

e

1.3

c

d

d

Anströmung

1.2

Figur 3

a

α

b

Anströmung

Figur 4

Figur 5

1.4

1.2

1.1

Figur 6

Figur 7

Figur 8